# EUROPÄISCHE PATENTSCHRIFT

(11) **EP 1 047 237 B1**
(45) Veröffentlichungstag und Bekanntmachung des Hinweises auf die Patenterteilung: **25.01.2006**
(21) Anmeldenummer: 00104253.0
(22) Anmeldetag: 01.03.2000
(51) Int. Cl.: H04L 29/06, H04M 7/00, H04M 1/247, H04M 1/725, H04M 3/42

(54) **Kommunikationssystem zum Steuern eines Kommunikationsendgerätes durch einem entfernten Rechner**
Communications system for controlling a terminal from a remote computer
Système de communication pour controler un terminal de communication d'un ordinateur à distance

(30) Priorität: 30.03.1999 US 281695
(43) Veröffentlichungstag der Anmeldung: 25.10.2000
(73) Patentinhaber: SIEMENS AKTIENGESELLSCHAFT, 80333 München (DE)
(72) Erfinder: Brieskorn, Jürgen, 82269 Geltendorf (DE); Korpi, Markku, 82319 Starnberg (DE); Sassin, Michael, San Jose, CA 95126 (US); Shaffer, Shmuel, Palo Alto, CA 94301 (US)

(56) Entgegenhaltungen:
- WO-A-98/17048
- US-A- 5 541 986
- US-A- 5 570 420
- US-A- 5 657 378
- US-A- 5 790 648
- ECMA TC32/TG11: "Services for Computer Supported Telecommunications Applications (CSTA) Phase III, Chapters 1-6" STANDARD ECMA-269 VERSION 1, [Online] Dezember 1997 (1997-12), Seiten i-34, XP002264596 Gefunden im Internet: <URL:http://ftp.tomsknet.ru/docs/ecma/ecma -st/files/ecma-269/> [gefunden am 2003-12-10]

## Beschreibung

Die Erfindung betrifft ein Kommunikationssystem mit einem Kommunikationsendgerät, das über ein erstes Netz mit mindestens einem weiteren Kommunikationsendgerät verbindbar ist und das eine zentrale Steuerung enthält. Diese Steuerung steuert die Funktion des Kommunikationsendgerätes, wobei sie Befehle eines Programmabschnitts abarbeitet.

Ein Kommunikationsendgerät wird durch Leistungsmerkmale charakterisiert, d.h. es enthält Funktionen, die das Kommunikationsendgerät zur Verfügung stellt. Diese Leistungsmerkmale sind durch Programmabschnitte definiert, die von einer Mikroprozessorsteuerung abgearbeitet werden und die z.B. in einem Speicherbaustein des Kommunikationsendgerätes abgelegt sind. Solche Leistungsmerkmale sind u.a. Aufbau und Abbau von Verbindungen zu anderen Kommunikationsendgeräten oder die Umlenkung ankommender Rufe. Das Hinzufügen eines weiteren Leistungsmerkmals zu bereits vorhandenen Leistungsmerkmalen erfordert den Austausch des Speicherbausteins, der die entsprechenden Programmteile für die Leistungsmerkmale enthält. Um den zeitaufwendigen Austausch, der zudem Fachkenntnis erfordert, zu vermeiden, ist häufig ein Austauschen des Kommunikationsendgerätes gegen ein neues Gerät notwendig. Dabei entstehen Anschaffungskosten für das neue Gerät. Außerdem gehen persönliche Daten des Benutzers, z.B. Rufnummern eines im Speicher des Kommunikationsendgerätes gespeicherten Rufnummernverzeichnisses, verloren, da sie im allgemeinen nicht in den Speicher des neuen Gerätes übernommen werden.

US5541986 A relates to programming Analog Display Service Interface (ASDI) compatible telephone sets by downloading scripts from the network over a Bellcore defined interface to the telephone sets. A custom service script is automatically generated for a display telephone set based on a user profile of requested features and sets of generic scripts for each of these features. It comprises specifying a general template for a set of service features, specifying line specific attributes for a feature, and then combining the two into a service module. Both the template and service modules are specified in terms script instructions grouped in blocks defined as call states, event handlers, soft keys, or macros. A customer's service is composed of multiple service modules which, when selected, would be consolidated by a network server computer into a singular service script, then compiled for downloading and transmitted to a local processor in the compatible screen telephone.

W09817048 A1 contains a Multimedia Telecommunications Call Centre which provides integrated video, audio, data and telephony functionality, together with connectivity to the Internet, ISCN, PSTN, and other wide-area networks. The Call Centre comprises a Local Area Network having a Gateway, a Gatekeeper and a Call Manager. Incoming multimedia calls are received by the Gateway and permitted by the Gatekeeper under control of the Call Manager. Communications between the Gateway and the Gatekeeper preferably take place across the network and comply with the ITU H.323 standard protocol. Communications between the Gatekeeper and the Call Manager preferably take place across the network and comply with the European Computer Manufacturers Association CSTA standard protocol.

Aufgabe der Erfindung ist es, ein Kommunikationssystem zur Verfügung zu stellen, beim dem die Leistungsmerkmale eines Kommunikationsendgerätes gesteuert und gegebenenfalls geändert werden, ohne daß in das Kommunikationsendgerät eingegriffen werden muß.

Die Aufgabe wird durch ein Kommunikationssystem mit dem im Patentanspruch 1 angegebenen Merkmalen gelöst. Vorteilhafte Weiterbildungen sind in den Unteransprüchen angegeben.

Die Erfindung geht von der Überlegung aus, daß ein Beeinflussen der Funktion eines Kommunikationsendgerätes, ohne daß Änderungen am Kommunikationsendgerät vorzunehmen sind, möglich wird, wenn Zustandsdaten, z.B. eine Tasteneingabe eines Benutzers des Kommunikationsendgerätes, an einen entfernten Rechner übertragen werden. Dieser entfernte Rechner wertet dann die Zustandsdaten aus und ermittelt anhand der Zustandsdaten eine Befehlsfolge. Diese Befehlsfolge wird zurück an das Kommunikationsendgerät übermittelt und von der Steuerung des Kommunikationsendgerätes als Programmabschnitt verwendet, bei dessen Abarbeitung ein Leistungsmerkmal erfüllt wird.

Zwischen den Kommunikationsendgeräten werden Bitfolgen zur Bezeichnung von Leistungsmerkmalen, z.B. Rufannahme und Rufweiterleitung, ausgetauscht. Ein Kommunikationsprotokoll legt die Leistungsmerkmale und die auszutauschenden Bitfolgen fest. Programmabschnitte, die das Kommunikationsendgerät nach Empfang der Bitfolge des Leistungsmerkmales ausführt, sind in einem Speicher des Kommunikationsendgerätes gespeichert. Der vom entfernten Rechner übermittelte Programmabschnitt enthält Anweisungen, um beispielsweise den Namen eines anrufenden Teilnehmers auf einem Datensichtgerät des Kommunikationsendgerätes anzuzeigen. Dieser Programmabschnitt wird z.B. von einer zentralen Steuerung des Kommunikationsendgerätes abgearbeitet. Die Zuordnung eines neuen Leistungsmerkmals, das vom entfernten Rechner aufgrund der übermittelten Zustandsdaten ausgewählt wird, zu dem an das Kommunikationsendgerät zu übermittelnden Programmabschnitt ist nur im entfernten Rechner bekannt. Änderungen an diesem Programmabschnitt erfolgen im entfernten Rechner; ein Austausch eines Speicherbausteins im Kommunikationsendgerät oder des Kommunikationsendgerätes selbst entfällt.

Daten, z.B. ein Rufnummernverzeichnis, werden auf einem externen Speichermedium des entfernten Rechners gespeichert. Diese Daten stehen damit auch nach einem Austausch des Kommunikationsendgerätes, z.B. wegen eines Defektes, weiter zur Verfügung.

Die Dauer der Verbindung zwischen Kommunikationsendgerät und entferntem Rechner kann sich z.B. nach der Dauer der Verbindung zwischen dem Kommunikationsendgerät und dem weiteren Kommunikationsendgerät richten. Eine erste Ausführungsform sieht vor, daß bei jedem Aufbau bzw. Abbau der Verbindung zwischen den Kommunikationsendgeräten die Verbindung zum entfernten Rechner auf- bzw. abgebaut wird. Diese Ausführungsform ist insbesondere bei Kommunikationsendgeräten sinnvoll, die sehr selten, z.B. einmal am Tag, genutzt werden.

Wird das Kommunikationsendgerät beispielsweise zu bestimmten Tageszeiten sehr häufig genutzt, sieht eine zweite Ausführungsform einen zeitlich verzögerten Verbindungsabbau zum entfernten Rechner vor. Damit wird die Belastung des ersten Netzes durch häufigen Verbindungsaufbau und -abbau vermieden.

Schließlich ist eine dritte Ausführungsform denkbar, bei der sich die Dauer der Verbindung zwischen entferntem Rechner und Kommunikationsendgerät nach der Empfangsbereitschaft des entfernten Rechners richtet. Das heißt, sobald auf dem entfernten Rechner ein Programm gestartet wird, das eine Auswertung der Zustandsdaten und das Ermitteln der Befehlsfolge vornimmt, wird die Verbindung zwischen Kommunikationsendgerät und entferntem Rechner aufgebaut. Der Abbau der Verbindung erfolgt unmittelbar bevor das Programm beendet wird. Diese Ausführungsform vermeidet eine den Verbindungsaufbau verlängernde Reaktionszeit.

Bei dieser dritten Ausführungsform ist es günstig, die Adresse des Kommunikationsendgerätes in einem Speicher des entfernten Rechners zu speichern, weil nun der entfernte Rechner die Verbindung zum Kommunikationsendgerät auf- und abbaut. Damit ist es möglich, den entfernten Rechner auszutauschen, ohne Änderungen am Kommunikationsendgerät vorzunehmen. Beispielsweise wird vermieden, die Adresse des neuen entfernten Rechners dem Kommunikationsendgerät mitzuteilen.

Bei einer Weiterbildung der Erfindung wird für den Datenaustausch zwischen den Kommunikationsendgeräten ein Verfahren verwendet, das durch das bekannte Internet Protocol definiert wird. Dieses Protokoll legt fest, wie die zwischen den Kommunikationsendgeräten auszutauschenden Daten in Datenpakete aufgeteilt werden und definiert ein Format für Adressen der Kommunikationsendgeräte. Mit Hilfe dieses Verfahrens lassen sich zwischen den Kommunikationsendgeräten außer Sprach- und Steuerdaten z.B. auch Bilddaten übertragen.

Besonders günstig ist es, das durch das Internet Protocol definierte Verfahren auch für den Datenaustausch zwischen dem entfernten Rechner und dem Kommunikationsendgerät zu verwenden. Dieses Protokoll wird insbesondere für den Datenaustausch zwischen Rechnern in einem Rechnerverbund eingesetzt. Die Verwendung dieses Protokolls erlaubt es, daß jeder Rechner des Rechnerverbundnetzes eine Verbindung zum Kommunikationsendgerät aufbaut und es steuert. Dies setzt voraus, daß der Rechner das Programm zur Auswertung der Zustandsdaten abarbeitet.

Ferner gestattet die vorgenannte Weiterbildung, daß die Verbindungen zu dem entfernten Rechner und dem weiteren Kommunikationsendgerät über das bekannte Internet, d.h. ein Rechnerverbundnetz, hergestellt werden. Das bedeutet, daß für die Verbindungen zwischen den Kommunikationsendgeräten und für die Verbindung zum entfernten Rechner das gleiche Kommunikationsnetz benutzt wird. Damit ist der Aufbau eines eigenen Kommunikationsnetzes nicht erforderlich. Zudem sind Verbindungen über das Internet im Vergleich zu Telefonverbindungen kostengünstiger.

Um den Austausch von Sprach- und Steuerdaten zwischen Kommunikationsendgeräten unterschiedlicher Hersteller zu ermöglichen, sollte das Kommunikationsendgerät die Verbindung zu dem weiteren Kommunikationsendgerät gemäß dem durch das bekannte Kommunikationsprotokoll H.323 festgelegte Verfahren steuern. Das H.323-Protokoll legt ein Datenformat und die zwischen den Kommunikationsendgeräten zu übertragenden Steuerdaten fest.

Ein Beispiel für eine solches Steuerdatum ist eine Nachricht SETUP. Ein rufendes Kommunikationsendgerät schickt eine Bitfolge, z.B. "00000101", die vom H.323-Protokoll der Nachricht SETUP zugeordnet wird, an ein gerufenes Kommunikationsendgerät, um eine Verbindung aufzubauen. Das gerufene Kommunikationsendgerät führt, nachdem es die Bitfolge empfangen hat, eine Befehlsfolge aus, die z.B. ein Klingelzeichen ertönen läßt und mit der eine Bitfolge "00000001" an das rufenden Kommunikationsendgerät übermittelt wird. Die Bitfolge "00000001" entspricht einer Nachricht ALERT, mit der das gerufene Kommunikationsendgerät dem rufenden Kommunikationsendgerät die Bereitschaft zum Verbindungsaufbau mitteilt. Das H.323-Protokoll legt fest, welche Nachrichten zwischen den Kommunikationsendgeräten auszutauschen sind. Nach Empfang und Auswerten der Nachricht führt das Kommunikationsendgerät eine dieser Nachricht zugeordnete Befehlsfolge aus. Ein solches Protokoll wird auch als funktionales Protokoll bezeichnet. Vorteil von funktionalen Protokollen ist die geringe Menge von Steuerdaten, die zwischen den Kommunikationsendgeräten ausgetauscht werden. Funktionale Protokolle werden dann eingesetzt, wenn dem Kommunikationsendgerät die zum Durchführen eines Leistungsmerkmals benötigten Steuerbefehle bekannt sind. Ein weiteres funktionales Protokoll ist das H.450-Protokoll. Es legt für Kommunikationsendgeräte, die die Verbindungen zu anderen Kommunikationsendgeräten gemäß dem H.323-Protokoll steuern, Steuerdaten für Leistungsmerkmale fest, z.B. Rückruf bei Besetzt.

Die Steuerung der Kommunikation zwischen den Kommunikationsendgeräten kann von einer eigenen, ersten Kommunikationssteuerung übernommen werden. Dadurch wird die zentrale Steuerung entlastet. Die zentrale Steuerung kann z.B. Tastatureingaben auswerten, während die erste Kommunikationssteuerung einen Verbindungsaufbau durchführt. Zusätzlich wird vermieden, daß eine Störung der Verbindung zwischen den Kommunikationsendgeräten die zentrale Steuerung stört.

Besonders günstig ist es, wenn auch die Steuerung der Kommunikation zum entfernten Rechner von einer eigenen, zweiten Kommunikationssteuerung übernommen wird. Damit wird vermieden, daß Störungen der Verbindung mit dem entfernten Rechner, z.B. durch Ausfall des entfernten Rechners, die Kommunikation zwischen den Kommunikationsendgeräten beeinflussen.

Eine vorteilhafte Weiterbildung der Erfindung sieht die Verwendung eines durch das CSTA-Protokoll (Computer Supported Telephone Application) definierten Verfahrens für die Steuerung der Verbindung zwischen dem entfernten Rechner und dem Kommunikationsendgerät vor. Dieses Protokoll unterstützt die Übermittlung von Zustandsdaten vom Kommunikationsendgerät zum entfernten Rechner und die Übermittlung von Steuerbefehlen vom entfernten Rechner an das Kommunikationsendgerät. Zustandsdaten sind z.B. Informationen über eingehende Anrufe und eine von einem Benutzer des Kommunikationsendgerät gewählte Rufnummer eines anzurufenden Teilnehmers.

Mit den übermittelten Steuerbefehlen wird beispielsweise eine Rufnummer auf einem Datensichtgerät des Kommunikationsendgerät ausgegeben. Das CSTA-Protokoll wird auch als stimulierendes Protokoll bezeichnet. Stimulierende Protokolle ermöglichen es, dem Benutzer des Kommunikationsendgerätes neue Leistungsmerkmale anzubieten, indem für die neuen Leistungsmerkmale benötigte Programmabschnitte vom entfernten Rechner an das Kommunikationsendgerät übermittelt werden. Die übermittelten Programmabschnitte werden von der zentralen Steuerung abgearbeitet und damit die entsprechende Funktion ausgeführt. Die benötigten Programmabschnitte werden jedesmal vor der Ausführung erneut vom entfernten Rechner an das Kommunikationsendgerät übertragen, so daß ein Speichern der übermittelten Programmabschnitte nicht notwendig ist.

Das CSTA-Protokoll legt eine Menge von CSTA-Befehlen fest, die weitgehend Steuerbefehlen entsprechen, aber eine vom Hersteller des jeweiligen Kommunikationsendgerätes unabhängige Syntax besitzen. Eine Weiterbildung der Erfindung sieht vor, daß die vom Rechner ermittelte Befehlsfolge ausschließlich CSTA-Befehle enthält, die an das Kommunikationsendgerät übermittelt werden. Eine Anpassung eines für die Ermittlung der Befehlsfolgen zuständigen Programms des entfernten Rechners an Kommunikationsendgeräte verschiedener Hersteller wird dadurch vermieden.

Die Umsetzung der CSTA-Befehle in Steuerbefehle des Kommunikationsendgerätes kann z.B. von der zentralen Steuerung übernommen werden. Vorteilhaft ist die Verwendung eines eigenen, zweiten Umsetzers, um die zentrale Steuerung zu entlasten.

Bei einer vorteilhaften Weiterbildung liest die zentrale Steuerung aus einem Tastaturspeicher Tastenkodes von Tasten, die der Benutzer betätigt hat. Diese Weiterbildung gestattet es dem Benutzer, die gewählte Tastenfolge zu korrigieren, bevor mit dem Verbindungsaufbau begonnen wird.

Eine Weiterbildung der Erfindung sieht ferner vor, daß die Zustandsdaten die Tastenkodes betätigter Tasten enthalten. Damit ist es möglich, beispielsweise die Rufnummer eines anzurufenden Teilnehmers an den entfernten Rechner zu übermitteln. Ein Kontrollprogramm, das der entfernte Rechner abarbeitet, prüft vor dem Verbindungsaufbau, ob die Rufnummer gesperrt ist. Durch diese Weiterbildung ist es ferner möglich, Tasteneingaben des Benutzers auch zur Auswahl von Menüeinträgen zu verwenden, die auf einem Datensichtgerät angezeigt werden.

Eine weitere Ausführungsform sieht vor, daß mit den Zustandsdaten ein das Kommunikationsendgerät identifizierendes Datum übermittelt wird. Diese Ausführungsform erlaubt es, daß der entfernte Rechner Verbindungen zu mehreren Kommunikationsendgeräten aufbaut. Als identifizierendes Datum kann z.B. eine Kennziffer verwendet werden, die beim Aufbau der Verbindung zwischen entferntem Rechner und Kommunikationsendgerät vom entfernten Rechner festgelegt wird.

Nachfolgend wird ein Ausführungsbeispiel der Erfindung anhand der Zeichnung näher erläutert. Darin zeigt:

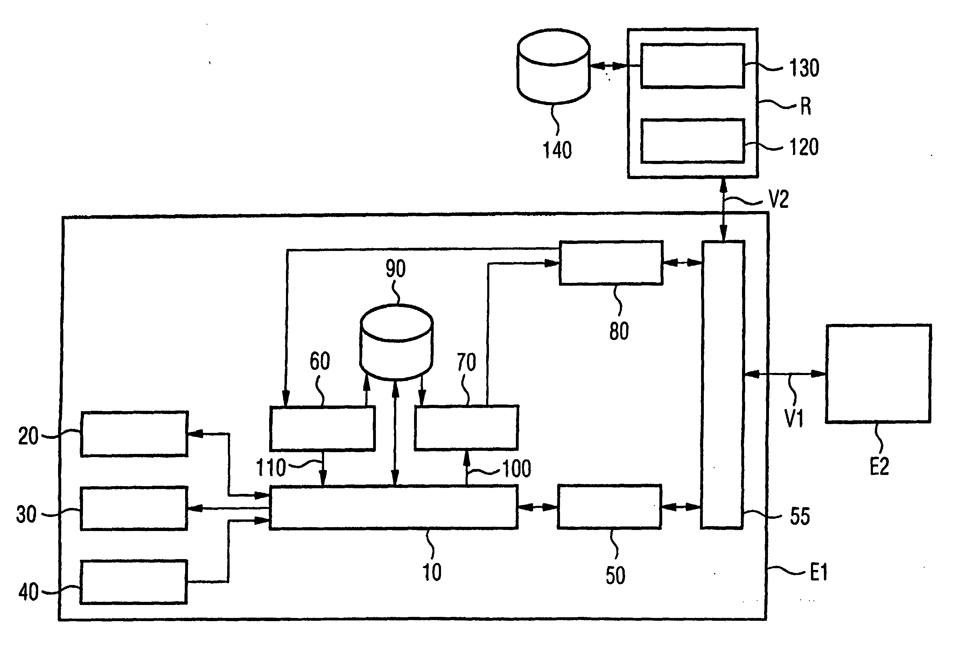

- Figur 1: Schematisch den Aufbau eines Kommunikationssystems mit zwei Kommunikationsendgeräten und einem Rechner.

Figur 1 zeigt ein Kommunikationssystem mit einem Kommunikationsendgerät E1, das mit einem Rechner R und einem weiteren Kommunikationsendgerät E2 verbunden ist. Im folgenden wird der Aufbau des Kommunikationsendgerätes E1 erläutert. Ein Hörer 20, ein Datensichtgerät 30 und eine Tastatur 40 bilden eine Benutzerschnittstelle des Kommunikationsendgerätes E1. Den Datenaustausch mit dem zweiten Kommunikationsendgerät E2 steuert eine erste Kommunikationssteuerung 50. Für den Datenaustausch mit dem Rechner R sind ein erster und zweiter Umsetzer 60 bzw. 70 und eine zweite Kommunikationssteuerung 80 zuständig. Eine zentrale Steuerung 10 steuert Funktionen des Kommunikationsendgerätes E1, z.B. die Auswertung von Tasteneingaben eines Benutzers des Kommunikationsendgerätes E1.

Die von einem nicht dargestellten Mikrofon des Hörers 20 aufgenommenen und von einem A/D-Wandler (Analog/Digital-Wandler) digitalisierten Sprachdaten des Benutzers werden von der zentralen Steuerung 10 übernommen und an die erste Kommunikationssteuerung 50 weitergeleitet. Die erste Kommunikationssteuerung 50 bildet aus den Sprachdaten Datenpakete gemäß einem H.323-Protokoll. Das H.323-Protokoll legt ein Verfahren zum Austausch von Sprachdaten zwischen den Kommunikationsendgeräten E1 und E2 fest, die über eine Internetverbindung V1 miteinander verbunden sind. Über eine Leitungsschnittstelle 55 hat das erste Kommunikationsendgerät E1 Zugang zu einem hier nicht dargestellten Rechnernetz, über das die Internetverbindung V1 hergestellt wird. Entsprechend bereitet die erste Kommunikationsteuerung 50 empfangene Datenpakete, die digitalisierte Sprachdaten enthalten, auf und übergibt sie der zentralen Steuerung 10, die diese an einen nicht dargestellten D/A-Wandler (Digital/Analog-Wandler) des Hörers 20 weiterleitet. Die vom D/A-Wandler erzeugten analogen Sprachsignale werden von einem Lautsprecher des Hörers 20 ausgegeben.

Benutzereingaben, die das Verhalten des ersten Kommunikationsendgerätes E1 beeinflussen, z.B. das Abnehmen des Hörers 20, wertet die zentrale Steuerung 10 ebenfalls aus. Nimmt z.B. der Benutzer den Hörer 20 ab, ändert sich der Spannungspegel einer Steuerleitung, die den Hörer 20 mit der zentralen Steuerung 10 verbindet. Die zentrale Steuerung 10 registriert diesen geänderten Spannungspegel und schreibt in eine Speicherzelle Z1 eines Speichers 90 des Kommunikationsendgerätes E1 einen ersten Wert "1". Dieser erste Wert "1" gibt an, daß der Hörer 20 abgenommen wurde; ein zweiter Wert "0" in der Speicherzelle Z1 gibt an, daß der Hörer 20 aufgelegt ist. Inhalte weiterer Speicherzellen des Speichers 90 geben Zustände weiterer Funktionseinheiten des Kommunikationsendgerätes E1 wieder, z.B. der Tastatur.

Der erste Umsetzer 70 kennt die Zuordnung von Speicherzellen zu Funktionseinheiten des Kommunikationsendgerätes E1. Hat die zentrale Steuerung 10 den Inhalt einer Speicherzelle geändert, schickt sie die Adresse der geänderten Speicherzelle über eine erste Adreßleitung 100 an den ersten Umsetzer 70. Der erste Umsetzer 70 liest beispielsweise den ersten Wert "1" aus der Speicherzelle Z1 und bildet daraus ein CSTA-Datenpaket (Computer Supported Telephone Application) mit der Information über den abgenommenen Hörer 20. Das CSTA-Datenpaket wird an die zweite Kommunikationssteuerung 80 übergeben, die es über eine LAN-Verbindung V2 (Local Area Network) an eine Kommunikationseinheit 120 des Rechners R übermittelt.

Ein Programm 130, das der Rechner R abarbeitet, wertet das empfangene Datenpaket aus. In diesem Beispiel wird mit Hilfe des Programmes 130 folgendes Leistungsmerkmal dem Benutzer zur Verfügung gestellt: Sobald der Benutzer den Hörer 20 abnimmt, um eine Rufnummer zu wählen, wird die von ihm am häufigsten gewählte Rufnummer auf dem Datensichtgerät 30 angezeigt. Betätigt der Benutzer eine Wahlwiederholtaste der Tastatur 40, wird eine Verbindung zum Teilnehmer mit der angezeigten Rufnummer aufgebaut.

Nach dem Auswerten des empfangenen CSTA-Datenpaketes ermittelt das Programm 130 mit Hilfe einer Liste L der gewählten Rufnummern eine Ziffernfolge der am häufigsten gewählten Rufnummer. Die Liste L ist in einem Speicher 140 des Rechners R gespeichert. Anhand der Liste L wird die am häufigsten gewählte Rufnummer bestimmt.

Das Programm 130 stellt eine CSTA-Nachricht INFO zusammen, mit der an das Kommunikationsendgerät E1 auf dem Datensichtgerät auszugebende Daten geschickt werden. Die Kommunikationseinheit 120 übernimmt vom Programm 130 die CSTA-Nachricht INFO und bildet ein weiteres CSTA-Datenpaket und schickt dieses über die LAN-Verbindung V2 an das Kommunikationsendgerät E1.

Die zweite Kommunikationssteuerung 80 empfängt das CSTA-Datenpaket und gibt die darin enthaltene CSTA-Nachricht INFO an den zweiten Umsetzer 60. Während der zweite Umsetzer 60 aus der CSTA-Nachricht INFO einen Befehl zur Ausgabe der Ziffernfolge auf dem Datensichtgerät 30 erstellt, steht die zweite Kommunikationssteuerung 80 wieder zum Senden und Empfangen von CSTA-Datenpaketen zur Verfügung. Der zweite Umsetzer 60 schreibt den erstellten Befehl in einen Speicherabschnitt A des Speichers 90 und teilt der zentralen Steuerung 10 über eine zweite Adreßleitung 110 die Adresse dieses Speicherabschnittes A mit. Die zentrale Steuerung 10 liest den Befehl und führt ihn aus, so daß auf dem Datensichtgerät 30 die Ziffernfolge angezeigt wird.

Die zentrale Steuerung 10 übermittelt den Tastenkode der Taste, die der Benutzer als nächstes betätigt, an den Rechner R. Ist der übermittelte Tastenkode derjenige der Wahlwiederholtaste, stellt das Programm 130 eine Folge von CSTA-Befehlen zusammen, die die Ziffernfolge der am häufigsten gewählten Rufnummer in einen nicht dargestellten Tastaturspeicher des Kommunikationsendgerätes E1 schreibt.

Die Kommunikationseinheit 120 bildet CSTA-Datenpakete mit diesen CSTA-Befehlen und übermittelt diese CSTA-Datenpakete an die zweite Kommunikationssteuerung 80. Der zweite Umsetzer 60 setzt die CSTA-Befehle in Steuerbefehle um, die von der zentralen Steuerung 10 ausgeführt werden und die die der Ziffernfolge entsprechenden Tastenkodes in den Tastaturspeicher schreiben. Anschließend liest die zentrale Steuerung 10 die Tastenkodes aus dem Tastaturspeicher und übergibt sie an die erste Kommunikationssteuerung 50. Diese baut die Internetverbindung V1 zum Kommunikationsendgerät E2 auf, dem die am häufigsten gewählte Rufnummer zugeordnet ist.

Hätte der Benutzer statt der Wahlwiederholtaste eine Zifferntaste der Tastatur 40 gedrückt, wäre vom Programm 130 eine andere Befehlsfolge erstellt worden: Zunächst wären alle auf dem Datensichtgerät 30 angezeigten Zeichen entfernt worden.

Anschließend würde die vom Benutzer gewählte Ziffer dargestellt und an die erste Kommunikationssteuerung 50 übergeben.

Man erkennt, daß, um das oben beschriebene Leistungsmerkmal zu realisieren, die zentrale Steuerung 10 und die erste Kommunikationssteuerung 50 nicht geändert worden sind. Die Kommunikation zwischen den beiden Kommunikationsendgeräten E1 und E2 erfolgt gemäß dem durch das H.323-Protokoll definierten Verfahren. Die Ziffernfolge wird auch an den Rechner R übertragen, um die Liste L mit den gewählten Rufnummern zu aktualisieren.

In dem beschriebenen Beispiel wertet das Programm 130 die Tastatureingaben aus, wählt aus der Liste L die entsprechende Rufnummer aus und übermittelt eine Befehlsfolge zur Darstellung der Rufnummer auf dem Datensichtgerät an das Kommunikationsendgerät E1. Die beschriebene Vorgehensweise hat den Vorteil, daß nach Ersetzen des Kommunikationsendgerätes 10 durch ein anderes Gerät, z.B. wegen eines Defektes des Kommunikationsendgerätes E1, auf dem Datensichtgerät 30 dem Benutzer die gleiche Rufnummer angezeigt wird. Das Beispiel zeigt, wie Betriebsmittel des Rechners R, hier der Speicher 140, benutzt werden, um dem Benutzer des Kommunikationsendgerätes E1 ein neues Leistungsmerkmal zur Verfügung zu stellen. Ferner ist festzuhalten, daß die Funktionen, zu denen Programmabschnitte in einem Festwertspeicher des Kommunikationsendgerätes E1 abgelegt sind, auch bei Ausfall des Rechners R oder nicht vorhandener LAN-Verbindung V2 zur Verfügung stehen.

## Patentansprüche

1. Verfahren zum Steuern eines Kommunikationsendgerätes, bei dem
- ein Kommunikationsendgerät (E1) über ein erstes Netz mit mindestens einem weiteren Kommunikationsendgerät (E2) verbindbar ist,
- eine zentrale Steuerung (10) die Funktion des Kommunikationsendgeräts (E1) steuert,
**dadurch gekennzeichnet,**
**daß** eine Kommunikationssteuerung (80) des Kommunikationsendgeräts (E1) Zustandsdaten über das Kommunikationsendgerät (E1) an einen entfernten Rechner (R) über ein zweites Netz übermittelt und die Kommunikation zwischen dem Kommunikationsendgerät (E1) und dem entfernten Rechner (R) steuert,
**daß** der entfernte Rechner (R) anhand der Zustandsdaten ein Leistungsmerkmal auswählt und zu einer Befehlsfolge zuordnet,
**daß** die vom entfernten Rechner (R) zugeordnete Befehlsfolge über das zweite Netz an das Kommunikationsendgerät (E1) übermittelt wird.

2. Verfahren nach Anspruch 1,
**dadurch gekennzeichnet,**
**daß** die Datenübertragung über das erste Netz gemäß einem durch ein Internet Protocol (IP) definierten Verfahren erfolgt.

3. Verfahren nach Anspruch 2,
**dadurch gekennzeichnet,**
**daß** die Datenübertragung über das zweite Netz gemäß dem durch das Internet Protocol (IP) definierten Verfahren erfolgt.

4. Verfahren nach Anspruch 3,
**dadurch gekennzeichnet,**
**daß** das erste und zweite Netz das Internet sind.

5. Verfahren nach einem der Ansprüche 2 bis 4,
**dadurch gekennzeichnet,**
**daß** für die Kommunikation zwischen den Kommunikationsendgeräten (E1, E2) ein durch ein Protokoll H.323 festgelegtes Verfahren verwendet wird.

6. Verfahren nach einem der Ansprüche 1 oder 5,
**dadurch gekennzeichnet,**
**daß** ein erster Umsetzer (70) die Zustandsdaten von der zentralen Steuerung (10) erhält, der diese Zustandsdaten an ein durch das CSTA-Protokoll definiertes Datenformat anpaßt und an die Kommunikationssteuerung (80) des Kommunikationsgeräts (E1) weiterleitet.

7. Verfahren nach einem der Ansprüche 1 bis 6,
**dadurch gekennzeichnet,**
**daß** die vom entfernten Rechner (R) zugeordnete Befehlsfolge durch das CSTA-Protokoll definierte Befehlen enthält.

8. Verfahren nach Anspruch 7,
**dadurch gekennzeichnet,**
**daß** ein zweiter Umsetzer (60) die vom entfernten Rechner (R) übermittelten CSTA-Befehle in Steuerbefehle für die zentrale Steuerung (10) umsetzt.

9. Verfahren nach einem der Ansprüche 1 bis 8,
**dadurch gekennzeichnet,**
**daß** die zentrale Steuerung (10) Tastaturkodes betätigter Tasten aus einem Tastaturspeicher liest.

10. Verfahren nach Anspruch 9,
**dadurch gekennzeichnet,**
**daß** die Zustandsdaten Tastenkodes betätigter Tasten enthalten.

11. Verfahren nach Anspruch 9 oder 10,
**dadurch gekennzeichnet,**
**daß** aus den Zustandsdaten Befehle erzeugt werden, die Tastenkodes in den Tastaturspeicher schreiben.

12. Verfahren nach einem der Ansprüche 1 bis 11,
**dadurch gekennzeichnet,**
**daß** der entfernte Rechner (R) aus den Zustandsdaten Befehle' erzeugt, die Daten auf einem Datensichtgerät (30) des Kommunikationsendgerätes (E1) ausgeben.

13. Verfahren nach einem der Ansprüche 1 bis 12,
**dadurch gekennzeichnet,**
**daß** der entfernte Rechner (R) aus den Zustandsdaten Befehle zur Wiedergabe akustischer Signale erzeugt.

14. Verfahren nach einem der Ansprüche 1 bis 13,
**dadurch gekennzeichnet,**
**daß** die Zustandsdaten eine Rufnummer eines weiteren, anrufenden Kommunikationsendgerätes (E2) enthalten.

15. Verfahren nach einem der Ansprüche 1 bis 14,
**dadurch gekennzeichnet,**
**daß** der entfernte Rechner (R) eine Verbindung zum Kommunikationsendgerät (E1) aufbaut.

16. Kommunikationssystem mit
- einem Kommunikationsendgerät (E1), das über ein erstes Netz mit mindestens einem weiteren Kommunikationsendgerät (E2) verbindbar ist,
- einer zentrale Steuerung (10) zur Steuerung der Funktion des Kommunikationsendgeräts (E1),
**gekennzeichnet durch**
eine Kommunikationssteuerung (80) des Kommunikationsendgeräts (E1) zur Übermittlung von Zustandsdaten des Kommunikationsendgeräts (E1) an einen entfernten Rechner (R) über ein zweites Netz und zur Steuerung der Kommunikation zwischen dem Kommunikationsendgerät (E1) und dem entfernten Rechner (R),
zumindest ein Mittel des entfernten Rechners (R) zur Auswahl eines Leistungsmerkmals anhand der Zustandsdaten und zur Zuordnung einer Befehlsfolge und
zumindest ein Mittel zur Übermittlung der vom entfernten Rechner (R) zugeordnete Befehlsfolge über das zweite Netz an das Kommunikationsendgerät (E1).

## Claims

1. Method for controlling a communications terminal, whereby
- a communications terminal (E1) can be connected via a first network to at least one other communications terminal (E2),
- a central control unit (10) controls the operation of the communications terminal (E1),
**characterised in that**
a communications control unit (80) of the communications terminal (E1) transmits state data concerning the communications terminal (E1) to a remote computer (R) via a second network and controls communications between the communications terminal (E1) and the remote computer (R),
the remote computer (R) selects a service feature on the basis of the state data and assigns a command sequence,
the command sequence assigned by the remote computer (R) is transmitted via the second network to the communications terminal (E1)

2. Method according to claim 1,
**characterised in that** data transmission via the first network takes place in accordance with a method defined by an Internet Protocol (IP).

3. Method according to claim 2,
**characterised in that** data transmission via the second network takes place in accordance with the method defined by the Internet Protocol (IP).

4. Method according to claim 3,
**characterised in that** the first and second network are the Internet.

5. Method according to one of claims 2 to 4,
**characterised in that** a method defined by an H.323 protocol is used for communications between the communications terminals (E1, E2).

6. Method according to one of claims 1 or 5,
**characterised in that** a first converter (70) receives the state data from the central control unit (10), adapts this state data to a data format defined by the CSTA protocol and forwards it to the communications control unit (50) of the communications terminal (E1).

7. Method according to one of claims 1 to 6,
**characterised in that** the command sequence assigned by the remote computer (R) contains commands defined by the CSTA protocol.

8. Method according to claim 7,
**characterised in that** a second converter (60) converts the CSTA commands transmitted by the remote computer (R) into control commands for the central control unit (10).

9. Method according to one of claims 1 to 8,
**characterised in that** a central control unit (10) reads key codes of actuated keys from a keyboard memory.

10. Method according to claim 9,
**characterised in that** the state data contains key codes of actuated keys.

11. Method according to claim 9 or 10,
**characterised in that**, from the state data, commands are generated which write key codes to the keyboard memory.

12. Method according to one of claims 1 to 11,
**characterised in that**, from the state data, the remote computer (R) generates commands which output data to the visual display unit (30) of the communications terminal (E1).

13. Method according to one of claims 1 to 12,
**characterised in that**, from the state data, the remote computer (R) generates commands for reproducing audible signals.

14. Method according to one of claims 1 to 13,
**characterised in that** the state data contains a directory number of another, calling communications terminal (E2).

15. Method according to one of claims 1 to 14,
**characterised in that** the remote computer (R) establishes a connection to the communications terminal (E1).

16. Communications system having
- a communications terminal (E1) which can be connected via a first network to at least one other communications terminal (E2),
- a central control unit (10) for controlling the operation of the communications terminal (E1),
**characterised by**
a communications control unit (80) of the communications terminal (E1) for transmitting state data of the communications terminal (E1) to a remote computer (R) via a second network and for controlling communications between the communications terminal (E1) and the remote computer (R),
at least one resource of the remote computer (R) for selecting a service feature on the basis of state data and for assigning a command sequence and
at least one resource for transmitting the command sequence assigned by the remote computer (R) via the second network to the communications terminal (E1).

## Revendications

1. Procédé pour commander un terminal de communication, dans lequel
- un terminal de communication (E1) peut être connecté à au moins un autre terminal de communication (E2) par l'intermédiaire d'un premier réseau,
- une commande centrale (10) commande la fonction du terminal de communication (E1),
**caractérisé en ce que**
une commande de communication (80) du terminal de communication (E1) transmet des données d'état sur le terminal de communication (E1) à un ordinateur distant (R) par l'intermédiaire d'un deuxième réseau et commande la communication entre le terminal de communication (E1) et l'ordinateur distant (R),
l'ordinateur distant (R) sélectionne une caractéristique de prestation à l'aide des données d'état et l'affecte à une suite d'ordres,
la suite d'ordres affectée par l'ordinateur distant (R) est transmise au terminal de communication (E1) par l'intermédiaire du deuxième réseau.

2. Procédé selon la revendication 1,
**caractérisé en ce que**
la transmission de données se fait par l'intermédiaire du premier réseau selon un procédé défini par un protocole Internet (IP).

3. Procédé selon la revendication 2,
**caractérisé en ce que**
la transmission de données se fait par l'intermédiaire du deuxième réseau selon un procédé défini par un protocole Internet (IP).

4. Procédé selon la revendication 3,
**caractérisé en ce que**
les premier et deuxième réseaux sont l'Internet.

5. Procédé selon l'une des revendications 2 à 4,
**caractérisé en ce**
**qu'**on utilise, pour la communication entre les terminaux de communication (E1, E2), un procédé déterminé par un protocole H.323.

6. Procédé selon l'une des revendications 1 ou 5,
**caractérisé en ce**
**qu'**un premier convertisseur (70) reçoit les données d'état de la commande centrale (10), lequel adapte ces données d'état à un format de données défini par le protocole CSTA et les retransmet à la commande de communication (80) du terminal de communication (E1).

7. Procédé selon l'une des revendications 1 à 6,
**caractérisé en ce que**
la suite d'ordres affectée par l'ordinateur distant (R) contient des ordres définis par le protocole CSTA.

8. Procédé selon la revendication 7,
**caractérisé en ce**
**qu'**un deuxième convertisseur (60) convertit les ordres CSTA transmis par l'ordinateur distant (R) en ordres de commande pour la commande centrale (10).

9. Procédé selon l'une des revendications 1 à 8,
**caractérisé en ce que**
la commande centrale (10) lit hors d'une mémoire de clavier des codes clavier de touches actionnées.

10. Procédé selon la revendication 9,
**caractérisé en ce que**
les données d'état contiennent des codes touches de touches actionnées.

11. Procédé selon la revendication 9 ou 10,
**caractérisé en ce que**
sont générés, à partir des données d'état, des ordres qui écrivent des codes touches dans la mémoire de clavier.

12. Procédé selon l'une des revendications 1 à 11,
**caractérisé en ce que**
l'ordinateur distant (R) produit, à partir des données d'état, des ordres qui sortent des données sur un appareil de visualisation de données (30) du terminal de communication (E1).

13. Procédé selon l'une des revendications 1 à 12,
**caractérisé en ce que**
l'ordinateur distant (R) génère, à partir des données d'état, des ordres de restitution de signaux acoustiques.

14. Procédé selon l'une des revendications 1 à 13,
**caractérisé en ce que**
les données d'état contiennent un numéro d'appel d'un autre terminal de communication (E2) appelant.

15. Procédé selon l'une des revendications 1 à 14,
**caractérisé en ce que**
l'ordinateur distant (R) établit une connexion vers le terminal de communication (E1).

16. Système de communication comprenant
- un terminal de communication (E1) qui peut être connecté à au moins un autre terminal de communication (E2) par l'intermédiaire d'un premier réseau,
- une commande centrale (10) pour commander la fonction du terminal de communication (E1),
**caractérisé par**
une commande de communication (80) du terminal de communication (E1) pour la transmission de données d'état du terminal de communication (E1) à un ordinateur distant (R) par l'intermédiaire d'un deuxième réseau et pour la commande de la communication entre le terminal de communication (E1) et l'ordinateur distant (R),
au moins un moyen de l'ordinateur distant (R) pour la sélection d'une caractéristique de prestation à l'aide des données d'état et pour l'affectation d'une suite d'ordres et au moins un moyen pour la transmission de la suite d'ordres affectée par l'ordinateur distant (R) par l'intermédiaire du deuxième réseau au terminal de communication (E1).
